# EUROPEAN PATENT APPLICATION

(11) **EP 4 186 697 A1**
(43) Date of publication of application: **31.05.2023**
(21) Application number: 21846464.2
(22) Date of filing: 21.07.2021
(51) Int. Cl.: B32B 27/08, B32B 27/36, C08J 7/04

(54) **METHOD FOR THE MANUFACTURE AND DECORATION OF A MINERAL-FILLED RESIN SHOWER TRAY WITH AN EXTERNAL COATING, AND SHOWER TRAY OBTAINED BY SAID METHOD**

(30) Priority: 21.07.2020 ES 202030758
(71) Applicant: Moldcom Composites, S.L.U., 46190 Ribarroja del Turia (ES)
(72) Inventor: ANDRES ALEMANY, Francisco Javier, 46190 RIBARROJA DEL TURIA (ES)
(74) Representative: Sanz-Bermell Martinez, Alejandro
(86) International application number: PCT/ES2021/070549
(87) International publication number: WO 2022/018319

(57) **Abstract**

A method for the manufacture and decoration of a mineral-filled resin shower tray with an external coating, manufactured by means of the stages of applying an external coating layer on the internal surface of a mould, casting a mix of resin and mineral filler on the mould, curing and drying the mix, comprising the prior stages of disposing on the internal surface of the mould cavity a transfer film comprising on one of the sides thereof a pattern printed in ink, vacuum thermoforming the transfer film against the internal surface of the mould cavity, and the subsequent stage of removing the film from the surface of the mineral-filled resin shower tray with an external coating.

## Description

The object of the present invention is a method for the manufacture and decoration of a mineral-filled resin shower tray the main advantage of which is saving time and resources compared to other methods for the manufacture and decoration of mineral-filled resin shower trays with Gelcoat or polyurethane paint coating.

### State of the art

Currently there are many types of shower trays, such as enamelled steel shower trays, ceramic shower trays, acrylic shower trays, natural or composite stone shower trays, among others.

One type of shower tray are trays made from a mix of resins and natural minerals, typically made of a mineral filler composition, such as marble pebbles or calcium carbonate and polyester or polyurethane resin, this type of trays being typically equipped with an external coating.

Said external coating can be made of a material known as Gelcoat, which is a material made from epoxy or polyester resins, created to give a high-quality finish to the visible surface of a composite material. This material provides the features of waterproofing, durability, resistance to ultraviolet rays, resistance to degradation, resistance to hydrolysis, as well as providing colour to the part.

Another material that can be used for the external coating of mineral-filled resin shower trays is polyurethane paint, which additionally provides the features of high wear resistance, good elasticity, and excellent capacity to support weights and large loads without suffering deformations, or a great resistance to impacts.

For the manufacture of this type of mineral-filled resin shower trays with an external coating, firstly, an external coating layer is applied to the mould, usually less than 1 mm thick and preferably less than 500 microns thick. The external coating layer can be applied using a brush, or it is often applied by spray gun manually or in an automated manner. Subsequently, the mix comprising the resin is poured onto the mould that already comprises the external coating layer on its surface. Optionally, the mould with the mix goes through a vibrating machine to eliminate bubbles and compact the material forming the shower tray. Finally, the shower tray is passed through a kiln for curing the mix, and it is allowed to settle on special carts until it is completely stabilised.

To obtain a coloured shower tray, a mass pigmentation technique is used so that the colour does not detach from the tray, adding the pigments both to the mix of resin and minerals and to the applied coating.

When a complex decoration is to be obtained on the external surface of the shower tray, there are currently some techniques that allow the external decoration of a shower tray with complex patterns.

An example is digital sublimation printing. There are mainly two problems with this technique. First of all, adequate equipment for this purpose must be available, such as an inkjet printer, special sublimation inks, sublimation paper, and a transfer plate. First, an image is printed on the digital printer on the sublimation paper, and once printed, the paper is disposed on the surface of the shower tray. At that moment, the transfer plate previously configured with the required temperature, pressure and time is disposed and sublimation occurs, wherein the ink is activated by heat and goes from a solid to a gaseous state, penetrating the surface of the object. This technique has a number of problems. One of the problems is that it has to be carried out once the shower tray has been manufactured, which entails an increase in the manufacturing time of the decorated shower tray. In addition, there is a requirement for additional space for the required equipment. Another problem is the impossibility of using sublimation on the external coating and mineral fillers plus polyester resin due to the high temperatures that this process requires.

Another technique that presents similar problems to those discussed in the previous paragraph is the hydroprinting technique. In this process, a water-soluble polyvinyl paper film or film is used, which contains the desired motif to be transferred. Due to an activator, the film turns into ink, it is placed on the surface of the water and due to the pressure exerted by immersing the part in this liquid, the film adheres to the treated part. This technique also entails an increase in the manufacturing time of the decorated shower tray, as well as a requirement for a suitable space for carrying out the method.

There is a technique for decorating plastic parts by injection known as film insert moulding, as described for example in document US5989480. In this technique, an insert film is inserted into a cavity in the die of an injection mould and is suctioned so that it adapts to the shape of the cavity. After this step, the molten plastic is injected so that the insert film comprising the manufacturing and decoration pattern forms the surface of the part.

The method described in the previous paragraph is not suitable for decorating mineral-filled shower trays with an external coating, since, being injection moulding, it does not allow the formation of a material made up of two layers, as is the case with mineral-filled shower trays with an external coating. In addition, the fact that the insert layer makes up the surface of the dish causes this layer to be easily detached, and furthermore it is not suitable since it is desirable that the external coating is the surface layer due to its properties.

The present invention provides, in order to avoid the aforementioned problems, a method for the manufacture and decoration of a mineral-filled resin shower tray with an external coating wherein the printing of the manufacturing and decorating pattern takes place during the usual manufacturing process of same, a great finish is obtained in the cavities, edges and curves of the internal surface of the mould, in addition to the fact that it does not require a large amount of equipment or additional time to those which are used in the manufacture of conventional mineral-filled resin shower with external coating.

### Description of the invention

As explained, the present invention provides a method for the manufacture and decoration of a mineral-filled resin shower tray with an external coating and shower tray obtained by said method.

The method for the manufacture and decoration of a mineral-filled resin shower tray with an external coating consists of the following stages:
- Application of the transfer film on the mould. The transfer film comprises on one of the sides thereof the design to be applied to the surface of the shower tray printed in ink, said side being disposed towards the interior of the mould cavity. According to one embodiment option, the transfer film used is one of the following:
   ∘ Polycarbonate (PC) film
   ∘ Copolyester (PETG) film
   ∘ Water soluble polyvinyl film
   ∘ Vinyl film
- Vacuum thermoforming the transfer film against the internal surface of the mould cavity. In this stage, the edges of the transfer film are secured over the edges of the mould, heat is applied so that the transfer film softens so that when it softens it can adapt to the shape of the mould, and the vacuum between the internal surface of the mould cavity and the transfer film is preferably produced by suction.
- Applying the external coating layer on the transfer film disposed on the internal surface of the mould cavity.
- Pouring the mineral-filled resin mix into the internal surface of the mould cavity on the external coating layer making up the shower tray.
- Stages of curing and drying the shower tray.
- Removing the film from the surface of the shower tray, the ink being inserted in the external coating layer.

In this process, the ink is transferred from the film to the surface of the mineral-filled resin shower tray with an external coating during the polymerisation process of same, so that the heat facilitates the transfer of the ink that penetrates between 3 and 25 microns in the surface layer of the part, more specifically it penetrates between 8 and 25 microns, and preferably penetrates between 10 and 15 microns, producing a quality finish and wherein the decoration obtained does not detach from the shower tray, the tray maintaining the properties granted by the external coating layer.

Optionally, the process comprises a final stage of applying an external protection layer such as a lacquer or a varnish.

## Claims

1. A method for the manufacture and decoration of a mineral-filled resin shower tray with an external coating, manufactured by means of the stages of applying an external coating layer on the internal surface of a mould, casting a mix of resin and mineral filler on the mould, curing and drying the mix, **characterised in that** it comprises the following preliminary stages:
• Disposing on the internal mould cavity a transfer film comprising on one of the sides thereof a pattern printed in ink, the side not comprising the pattern printed with ink being in contact with said internal surface of the mould cavity.
• Vacuum thermoforming the transfer film against the internal surface of the mould cavity; and **characterised in that** it comprises the following subsequent stages:
• Removing the film from the surface of the mineral-filled resin shower tray with an external coating.

2. The method for the manufacture and decoration of a mineral-filled resin shower tray with Gelcoat coating, according to claim 1, **characterised in that** the transfer film is a Polycarbonate (PC) film.

3. The method for the manufacture and decoration of a mineral-filled resin shower tray with an external coating, according to claim 1, **characterised in that** the transfer film is a Copolyester (PETG) film.

4. The method for the manufacture and decoration of a mineral-filled resin shower tray with an external coating, according to claim 1, **characterised in that** the transfer film is a water-soluble polyvinyl film.

5. The method for the manufacture and decoration of a mineral-filled resin shower tray with an external coating, according to claim 1, **characterised in that** the transfer film is a vinyl film.

6. The method for the manufacture and decoration of a mineral-filled resin shower tray with an external coating, according to any of claims 1 to 5, **characterised in that** the application of vacuum occurs by suction of the transfer film from the internal surface of the mould cavity.

7. The method for the manufacture and decoration of a mineral-filled resin shower tray with an external coating, according to any of claims 1 to 6, **characterised in that** the suction occurs through at least one hole made in the mould.

8. The method for the manufacture and decoration of a mineral-filled resin shower tray with an external coating, according to any of claims 4, 6 or 7, **characterised in that** the transfer film is removed from the external surface of the shower tray by washing with water once the manufacturing process has finished.

9. The method for the manufacture and decoration of a mineral-filled resin shower tray with an external coating, according to any of claims 1 to 8, **characterised in that** it comprises a final stage of applying an external protection layer.

10. The method for the manufacture and decoration of a mineral-filled resin shower tray with an external coating, according to claim 9, **characterised in that** the external protection layer is a lacquer.

11. The method for the manufacture and decoration of a mineral-filled resin shower tray with an external coating, according to claim 9, **characterised in that** the external protection layer is a varnish.

12. The method for the manufacture and decoration of a mineral-filled resin shower tray with an external coating, according to any of the preceding claims, **characterised in that** the external coating is made of Gelcoat.

13. The method for the manufacture and decoration of a mineral-filled resin shower tray with an external coating, according to any of claims 1 to 11, **characterised in that** the external coating is made of Polyurethane paint.

14. A shower tray decorated according to the method of claims 1 to 13, **characterised in that** it comprises a decorative layer inserted into its surface layer with a depth of between 3 and 25 microns, more specifically between 8 and 25 microns, and preferably between 10 and 15 microns.
